# EUROPÄISCHE PATENTSCHRIFT

(11) **EP 3 252 678 B1**
(45) Veröffentlichungstag und Bekanntmachung des Hinweises auf die Patenterteilung: **08.07.2020**
(21) Anmeldenummer: 17171959.4
(22) Anmeldetag: 19.05.2017
(51) Int. Cl.: G06K 19/077

(54) **VERSCHLUSSDECKEL MIT TRANSPONDER CHIP UND 2D-BARCODE**
CLOSURE CAP WITH TRANSPONDER CHIP AND 2D BARCODE
COUVERCLE DE FERMETURE AYANT UNE TRANSPONDEUR PUCE ET CODE BARRES 2D

(30) Priorität: 27.05.2016 DE 102016209224; 16.06.2016 DE 102016210738
(43) Veröffentlichungstag der Anmeldung: 06.12.2017
(73) Patentinhaber: MEGA-NOVA AG, 3048 Worblaufen (CH)
(72) Erfinder: Chappuis, Pierre, CH-3073 Gümligen (CH)
(74) Vertreter: Rupp, Christian

(56) Entgegenhaltungen:
- US-A1- 2008 041 947
- US-A1- 2011 218 730

## Beschreibung

Die vorliegende Erfindung bezieht sich auf einen gespritzten Kunststoffgegenstand, insbesondere einen Verschlussdeckel für Behälter sowie ein Verfahren zum Konfigurieren eines solchen gespritzten Kunststoffgegenstands bzw. Verschlussdeckels.

Jeder Verschluss - ausgestattet mit einer Erstöffnungsgarantie - erhält damit eine einmalige und unverwechselbare Identität, mit der das verschlossene Produkt über die gesamte Lieferkette vom Hersteller bis zum Endabnehmer lückenlos bis auf Produktebene dokumentiert werden kann. Zudem vermittelt das Verfahren alle Informationen über das Produkt wie Produktionsdaten, Zusammensetzung, Anwendungsvorschriften usw., die in einer entsprechenden Datenbank gespeichert sind.

Die Druckschrift US 2011/218730 A1 offenbart ein Verfahren zum Verwalten eines Datencenters unter Verwendung eines Mobilgeräts, wobei das Verfahren Folgendes umfasst: (a) In Reaktion auf eine Benutzeranfrage verursacht das Mobilgerät einen Identifikationsprüfer, um Informationen von einem oder mehreren Identifikationsanbieter zu erhalten, die an vorbestimmten Orten in dem Datencenter angeordnet sind und bestimmt einen Standort eines mobilen Geräts in dem Datencenter; (b) das mobile Gerät fordert eine Datencenter-Karte von einem Datencenter-Verwaltungssystem an, zeigt mindestens einen Teil der Karte auf einer Anzeige für mobile Geräte an und zeigt den Standort des mobilen Geräts auf mindestens einem Teil der Karte an; und (c) das Mobilgerät erhält vom Rechenzentrumsverwaltungssystem einen Geräteort eines Geräts im Rechenzentrum. Anspruch 1 ist gegenüber diesem Dokument abgegrenzt.

Aus der EP 1 910 983 B1 ist ein gespritzter Gegenstand aus Kunststoff bekannt, der eine mit dem Kunststoffinaterial des Gegenstandes hinterspritzte Folie und ein zwischen der Folie und dem gespritzten Kunststoffmaterial des Gegenstandes oder in der Folie integriert vorgesehenes RFID-Modul (insbesondere ein NFC-Chip) aufweist, wobei das RFID-Modul Antennen aufweist und die Folie gelocht ist. Weiterhin weist das RFID-Modul ein Loch auf und das Loch des RFID-Moduls ist konzentrisch um das Loch der Folie angeordnet, so dass sich das Material für den Spritzgießvorgang durch das Loch in der Folie und das Loch des RFID-Moduls hindurch einbringen lässt. Hierdurch lassen sich beispielsweise Verschlussdeckel herstellen. Allerdings sind die Kosten für ein derartiges RFID-Modul (oder NFC-Transponders) im Vergleich zu den Gesamtkosten eines gespritzten Gegenstandes, insbesondere eines einfachen gespritzten Verschlussdeckels, relativ hoch. Weiterhin bedingt ein mit einem RFID-Modul (oder NFC-Chip) versehener Kunststoffgegenstand aufgrund der Materialmischung besondere technische Maßnahmen beim Recycling.

Dementsprechend ist es eine Aufgabe der vorliegenden Erfindung, einen verbesserten, insbesondere in der Herstellung kostengünstigeren, gespritzten Kunststoffgegenstand, sowie ein Verfahren zu dessen Konfiguration bereitzustellen.

Diese Aufgabe wird durch die Gegenstände der unabhängigen Patentansprüche gelöst. Weitere vorteilhafte Ausgestaltungen sind in den abhängigen Ansprüchen zu finden.

Ein erster Aspekt der Erfindung betrifft einen gespritzten Kunststoffgegenstand, insbesondere Verschlussdeckel für Behälter,
aufweisend wenigstens ein 2d-Barcodeelement, wie bspw. ein QR-Code, auf seiner Oberseite,
sowie wenigstens einen vorzugsweise integrierten Chip, bspw. in Form eines Transponders mit Antenne, bspw. gemäß einem NFC- oder RFID-Standard, der drahtlos beschreibbar und auslesbar ist, wobei ein weiteres Beschreiben des Chips nach einem ersten Beschreiben des Chips durch ein drahtloses Signal sperrbar ist, der Chip indessen weiterhin auslesbar ist.
Unter "integriert" ist auch ein bspw. auf der von dem 2d-Barcodeelement abgewandten Seite eingelegter Chip zu verstehen. Vorzugsweise ist der Chip für einen Benutzer von außen nicht ersichtlich.
Dabei können Informationen, die in dem wenigstens einen 2d-Barcodelement codiert enthalten sind, auch in dem Chip unveränderbar eingeschrieben sein.
Der Chip kann auf einem auf der Rückseite des Gegenstands eingelegten Inlay angeordnet sein.
Dabei kann das Inlay eine Innendichtung auf der Rückseite eines Verschlussdeckels kaschieren.
Der Chip kann zusammen mit einer mit dem 2d Barcodeelement bedruckten Folie hinterspritzt sein.
Der Chip kann für eine NFC- und/oder UHF-Kommunikation ausgelegt sein.

Hinterspritzen bedeutet in diesem Zusammenhang, dass das Kunststoffmaterial sich vom Betrachter aus gesehen hinter der Folie verfestigt. Durch das Hinterspritzen der Folie wird eine besonders innige Verbindung zwischen der Folie und dem Kunststoffmaterial herbeigeführt, und die Folie ist untrennbar mit dem Kunststoffmaterial verbunden. Die abdeckende (Schutz-)Folie stellt einen Schutz des Matrix-Barcodes vor externen Einflüssen, wie beispielsweise UV-Strahlung oder mechanischem Abrieb, beispielsweise durch Verkratzen, sicher. Die Verwendung des Matrix-Barcodes sorgt zudem für eine kostengünstige Herstellung des Kunststoffgegenstandes, da ein Matrix-Barcode einfach aufgebracht (aufgedruckt) werden kann und somit günstiger als die Herstellung und Anbringung beispielsweise eines RFID-Moduls oder NFC-Moduls ist. Zudem ist die Wiederverwertung des Kunststoffgegenstandes insbesondere durch die Bereitstellung des Matrix-Barcodes anstatt eines RFID-Moduls verbessert, da ersterer keine elektronischen Komponenten aufweist.

Der Matrix-Barcode ("2D- Barcode") kann insbesondere von außen nach dem Spritzen des Kunststoffgegenstands aufgedruckt werden, bspw. durch einen Digitaldruck. In diesem Fall ist insbesondere keine weitere Folie erforderlich. Insbesondere kann der aufgedruckte Barcode somit die äußerste Schicht darstellen, eine schützende Folie, Schutzschicht etc. sind daher rein optional.
Ausweislich https://de.wikipedia.org/wiki/Digitaldruck ist:
*Digitaldruck (auch kurz* "*Digidruck*") *bezeichnet eine Gruppe von Druckverfahren, bei denen das Druckbild direkt von einem Computer in eine Druckmaschine übertragen wird, ohne dass eine statische Druckform benutzt wird.*

Weitere Merkmale, Vorteile und Eigenschaften der Erfindung sollen nunmehr anhand der Ausführungsbeispiele und der Figuren der begleitenden Zeichnungen erläutert werden.
- Figs. 1a - 1d: zeigen vier verschiedene Draufsichten von Folien.
- Figs. 2a - 2d: zeigen weitere Draufsichten von Folien in einer vergrößerten Ansicht.
- Fig. 3.: zeigt einen erfindungsgemäßen Verschlussdeckel, aufweisend wenigstens einen QR Code auf der Vorderseite sowie einen integrierten Chip, der drahtlos wenigstens einmal beschreibbar ist und drahtlos auslesbar ist.
- Fig. 4.: zeigt eine Innendichtung aus PE-Schaum mit einem auf einem Inlay angeordneten Chip.
- Fig. 5.: zeigt einen Querschnitt des Verschlussdeckels mit eingelegter Innendichtung, auf der rückseitig das Inlay mit dem Chip angeordnet ist. Es handelt sich um eine Skizze, die Maßstäbe entsprechen nicht zwangsläufig der Realität.

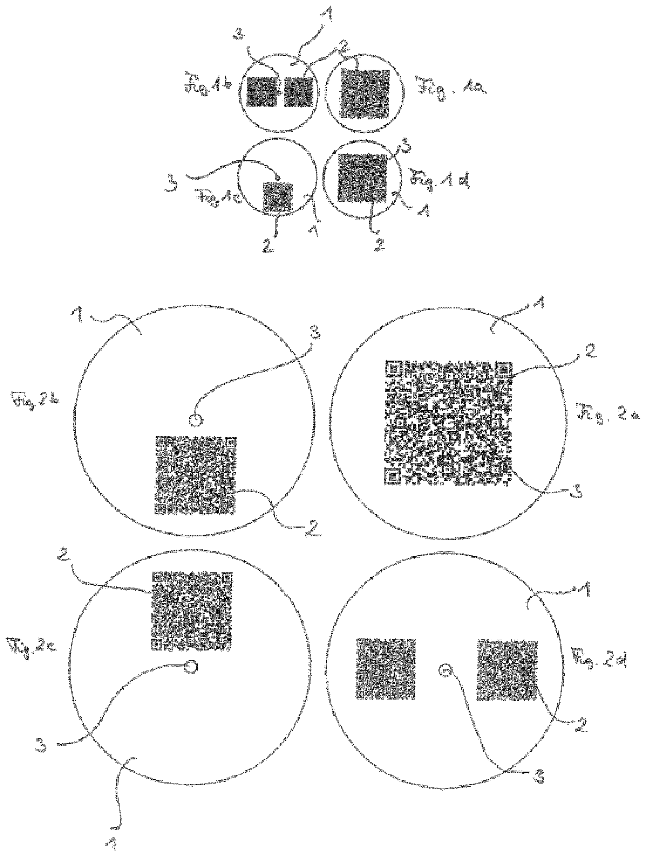

Dabei zeigen die Figs. 1a - 1d verschiedene Positionierungen von Matrix-Barcodes 2 auf einer kreisförmig ausgestalteten Folie 1. Die Folie 1 kann jedoch auch jede andere symmetrische oder asymmetrische Form (bspw. quadratisch, rechteckig, mehreckig, oval, rund etc.) aufweisen. Fig. la zeigt eine kreisförmig ausgestaltete Folie 1 auf welcher ein Matrix-Barcode (zweidimensionaler Code) 2 aufgedruckt ist oder aufgrund von anderen Aufbringungsverfahren auf der Folie 1 aufgebracht bzw. vorgesehen ist. In der Folie 1 ist ein Loch bzw. eine Ausnehmung 3 vorgesehen. Dabei kann sich das Loch 3 beispielsweise in der Mitte der kreisförmig ausgestalteten Folie 1 befinden. Weiterhin kann der Matrix-Barcode 2, der vorzugsweise als quadratische Fläche ausgestaltet ist, ebenfalls derart positioniert sein, dass dieser beispielsweise in der Mitte (vgl. Fig.1a) oder in einem anderen Bereich des Matrix-Barcodes das Loch 3 aufweist. Dabei ist es kein Problem, dass das Loch 3 innerhalb des Matrix-Barcodes 2 positioniert ist, da die Informationen auf dem Matrix-Barcode 2 mehrfach enthalten sind und somit eine erhöhte Redundanz der Informationen vorhanden ist. Die Folie 1 wird vorzugsweise in eine Spritzgussform eingelegt bzw. positioniert und das Material für den Spritzgießvorgang wird durch einen Einspritzkanal, der durch das Loch 3 in die Spritzgussform führt, eingebracht. Dadurch kann eine Hinterspritzung der Folie 1 erfolgen. Der Einspritzkanal hat üblicherweise und bevorzugt einen Durchmesser von 1 - 3mm, so dass das Loch 3, welches vorzugsweise wenigstens denselben Durchmesser wie der Einspritzkanal hat, und auch wenn es direkt durch den Barcode 2 führt bzw. in dem Bereich des Matrix-Barcodes 2 vorgesehen ist, aufgrund der redundanten Ausgestaltung des Matrix-Barcodes 2 kein Problem (also bspw. Informationsverlust) darstellt.

Figs. 1b - 1d zeigen weitere Ausführungsformen der Positionierung des Matrix-Barcodes 2 auf der Folie 1. Beispielsweise können, wie in Fig. 1b dargestellt, zwei Matrix-Barcodes seitlich von Loch 3 positioniert sein und das Loch 3 sich außerhalb der Matrix-Barcodes 2 befinden. Gemäß Fig. 1c kann aber auch der Matrix-Barcode 2 unterhalb des Lochs 3 positioniert sein. Mit anderen Worten kann/können der/die Matrix-Barcode(s) 2 mit der Ausnehmung bzw. dem Loch 3 für den Einspritzkanal überlappen oder seitlich davon angeordnet sein. Die Form der Folie 1, die Positionierung und die Anzahl der Matrix-Barcodes (auch bzgl. des Loches 3) ist jedoch nicht auf die in den Figs. 1a - 1d oder Figs. 2a - 2d dargestellten Ausführungsformen beschränkt. Vielmehr kann dies, je nach den speziellen Anforderungen der Praxis, beliebig gewählt und variiert werden.

Die Folie 1 kann dabei für die Herstellung eines gespritzten Kunststoffgegenstandes, insbesondere eines Verschlussdeckels für Behälter, verwendet werden, wobei die Folie 1 als Trägerfolie vorgesehen sein kann. Neben Verschlussdeckeln kann die Folie 1 auch auf anderen Gegenständen wie Seitenflächen von Bierkästen und dergleichen vorgesehen sein. Die Folie bzw. Trägerfolie 1 wird mit dem Matrix-Barcode(s) 2 versehen (bspw. bedruckt). Die Trägerfolie 1 kann ferner mit einer Beschichtung versehen werden. Diese Beschichtung kann eine weitere Schutzschicht bzw. Schutzfolie bilden und ist vorzugsweise auf der den Matrix-Barcode 2 aufweisenden Seite der Folie 1 vorgesehen, um den Matrix-Barcode 2 vor äußeren Einflüssen schützen zu können. Auf diese Weise kann eine mehrlagige Sandwich-Folie bereitgestellt werden. Vorzugsweise ist die Beschichtung aus einem lichtdurchlässigen Kunststoff bereitgestellt. In diesem Fall bildet die Schutzschicht vorzugsweise die dem Betrachter zugewandte Seite der Folie, wenn sie in einem gespritzten Kunststoffgegenstand hinterspritzt eingebracht ist, um von außen lesbar aber dennoch von der Umgebung geschützt bereitgestellt zu sein.

In einer weiteren Variation kann die Folie 1 aber auch vom Betrachter aus gesehen die äußerste Schicht bilden. Insbesondere in einem gespritzten Gegenstand hinterspritzt eingebracht ist der Matrix-Barcode 2 dann vom Betrachter aus gesehen vorzugsweise auf der Innenseite bzw. Rückseite der Folie 1 vorgesehen, sodass die Folie 1 selbst eine Schutzschicht für den Matrix-Barcode 2 bildet. In diesem Fall muss nicht unbedingt eine weitere Schutzschicht (auf der dann innenliegenden Seite der Folie bzgl. des gespritzten Gegenstandes) vorgesehen sein; diese kann aber zum Schutz des Matrix-Barcodes 2 gegenüber dem einzuspritzenden Material vorteilhaft sein.

Andererseits kann die Folie 1, wie zuvor beschrieben, auch mit einem Kunststoffmaterial, insbesondere Polyethylen (PE), Polypropylen (PP), oder einem anderen Material oder einer Folienschicht beschichtet sein. Als Schutzschicht bzw. Schutzfolie ausgebildet bildet diese Beschichtung vorzugsweise vom Betrachter aus gesehen die oberste Schicht der Folie 1; befindet sich also vorzugsweise bei Vorsehen der Folie an einer Oberseite des gespritzten Gegenstandes auf der Sichtseite bzw. Außenseite des gespritzten Gegenstandes. Zwischen der Folie 1 und der Beschichtung ist dann der Matrix-Barcode 2 vorgesehen.

Die Folie 1 selbst kann aus Polypropylen (PP), hochdichtem Polyethylen oder einem anderen lichtdurchlässigen Polymer bestehen, insbesondere wenn sie zur Außenseite bzw. Sichtseite eines gespritzten Gegenstandes gerichtet in diesem vorgesehen ist. Durch Bereitstellung der Folie 1 und/oder der optionalen Beschichtungen aus lichtdurchlässigen Material, also wenigstens der Folienlage, welche in dem gespritzten Gegenstand nach außen zur Sichtseite hin gerichtet ist, kann vorteilhafterweise der Matrix-Barcode 2 von einem Auslesegerät besonders einfach und gut ausgelesen werden und/oder diese Informationen an einen Server übermittelt werden, um dabei logistische Auswertungen und/oder Entscheidungen treffen zu können. Dabei kann der Matrix-Barcode 2 Herkunftsbezeichnungen, Inhaltsangaben und andere sicherheitsrelevante Informationen enthalten. Zur Fälschungssicherheit kann der Matrix-Barcode 2 eine durchlaufende Nummerierung enthalten. Als Auslesegerät kann beispielsweise ein Smartphone mit einem Barcode-Scanner (in der Regel bestehend aus einer Kamera und einer Barcode-Scanner-Software) verwendet werden.

Figuren 2a - 2d zeigen weitere Draufsichten von erfindungsgemäßen Folien in einer vergrößerten Ansicht. Dabei zeigt beispielsweise Fig. 2a wieder ein Loch 3, das in der Mitte der kreisförmigen Folie 1 positioniert ist, wobei gleichzeitig das Loch 3 mittig in dem Matrix-Barcode 2 liegt. Wie bereits hinsichtlich den Figs. 1a - 1d erwähnt, kann die Anzahl der Matrix-Barcodes, die Positionierung der Matrix-Barcodes auf der Folie als auch die Form der Folie 1 frei gestaltet und gewählt werden. Weiterhin ist es auch denkbar, dass nicht nur ein Loch 3 in Folie 1 bereitgestellt wird, sondern mehrere Löcher, um beispielsweise den Spritzgussvorgang beschleunigen zu können.

Zum grundsätzlichen Aufbau von Folien sowie dem Verfahren zum Hinterspritzen derselben wird auch auf die Ausführungen in der EP 1 9110 983 B1 verwiesen.

Auch wenn sich die oben beschriebenen Ausführungsbeispiele ausdrücklich auf folienbasierte Matrix-Codes beziehen, ist festzuhalten, dass sich die Erfindung auch auf trägerlos aufgebrachte Codes bezieht. Insbesondere kann der Matrix-Barcode ("2D- Barcode") von außen nach dem Spritzen des Kunststoffgegenstands aufgedruckt werden, bspw. durch einen Digitaldruck.

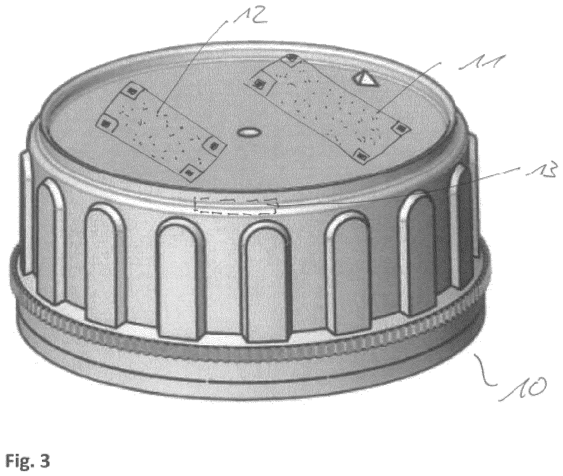

In Fig. 3 ist mit dem Bezugszeichen 10 ein Verschlussdeckel dargestellt, wie er beispielsweise für Chemikalienbehälter, Arzneimittel, etc. verwendbar ist.

Der Verschlussdeckel 10 besteht im Wesentlichen aus einem gespritzten Deckelteil.

Mit den Bezugszeichen 11 und 12 sind schematisch zwei Matrix-Barcodeelemente bezeichnet, die derart auf der Oberseite (das heißt, auf der von dem zu verschließenden Behälter und dem zu füllenden Gut abgewandten Seite des Deckels) angebracht sind, dass sie von außen her optisch auslesbar sind.

Mit dem Bezugszeichen 13 ist schematisch ein Chip bezeichnet, der zur drahtlosen Kommunikation ausgelegt ist. Der Chip 13 ist vorzugsweise von außen nicht sichtbar. Dieser Chip kann ein Transponder mit Antenne sein, bspw. gemäß einem NFC- oder RFID-Standard.

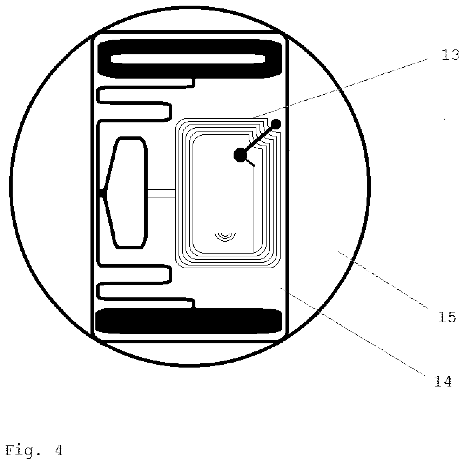

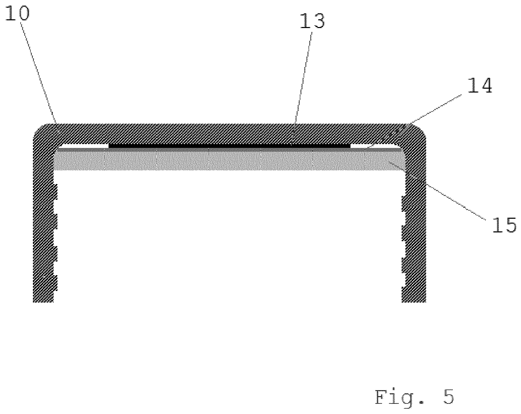

Wie Fig. 4. und Fig. 5. Zeigen, kann der Chip 13 auf der Unterseite des Gegenstands, beispielsweise auf einem Inlay als Träger als Kaschierung einer Innendichtung auf der Rückseite des Deckels 10 angebracht sein. Der Deckel 10 weist somit eine Innendichtung auf, auf der wiederum der Chip 13 auf einem Inlay als Träger aufgebracht ist. Dies ist ein Beispiel für die Anbringung des Chips auf der Innenseite des Deckels vorzugsweise durch Einlegen.

Vorzugsweise ist der wenigstens eine Chip für einen Benutzer von außen nicht optisch ersichtlich, also bspw. weder Transponder noch Antenne können von einem Benutzer gesehen werden. Dies kann bspw. durch eine nichttransparente Folie erreicht werden.

Es können auch mehrere drahtlos kommunizierende Chips vorgesehen sein, die bspw. gemäß unterschiedlichen Frequenzen und/oder Protokollen kommunizieren, und eine gemeinsame Antennen oder jeweils eine eigenen Antenne aufweisen.

Alternativ kann der Chip 13 zusammen mit einer die Matrix-Barcodeelemente 11, 12 aufweisenden Folie zusammen mit dem übrigen Verschlussdeckel 10 hinterspritzt werden. In diesem Fall ist also der Chip 13 in das Kunststoffmaterial des Deckels 10 integriert.

Der Chip 13 ist zur drahtlosen Kommunikation ausgelegt. Insbesondere kann er dazu ausgelegt sein, gemäß einem NFC-Standard oder gemäß UHF drahtlos zu kommunizieren. Die Kommunikation besteht vorzugsweise in einem (vorzugsweise sperrbaren) Beschreiben des Chips mit Daten und einem Auslesen der Daten aus dem Chip untrennbar.

Insbesondere ist gemäß der Erfindung der Chip dazu ausgelegt, dass drahtlos in ihn Daten/Informationen geschrieben werden können. Nach einem Beschreiben dieser Daten/Informationen in dem Chip 13 über eine drahtlose Schnittstelle kann dann ein weiteres Verändern oder Neubeschreiben des Chips 13 gesperrt ("gelockt") werden.

Vorzugsweise ist ein Teil der Daten, die in den Chip 13 geschrieben werden, zusätzlich bereits in den Matrix-Barcodes 11, 12 enthalten. Alternativ kann der Chip 13 Daten aufweisen, die vorzugsweise nach einem Auslesen von Daten aus den Matrix-Barcodes 11, 12 auf diesen ausgelesenen Daten beruhend erzeugt, resp. durch weitere Daten ergänzt und dann in den Chip 13 eingeschrieben wird.

Wie bereits erwähnt, kann der Chip auf Rollen angeliefert werden, aus denen vereinzelte Inlays gefertigt werden, die jeweils einen Chip aufweisen, wobei diese Inlays dann auf der Rückseite des Verschlussdeckels 10 so eingesetzt werden, dass sie eine auf der Rückseite vorgesehene Innendichtung kaschieren.

Vorzugsweise kann das Beschreiben des Chips 13 in Zuge des Befüllens des zugehörigen, durch den Deckel 10 zu verschließenden Behälters erfolgen. Beispielsweise kann somit auf einer Abfülllinie der QR-Code auf dem Verschlussdeckel 10 ausgelesen werden. Anschließend kann der wenigstens eine Chip 13 in dem Verschlussdeckel 10 beschrieben und dann gelockt, also für weiteres Beschreiben gesperrt werden. Es verbleibt somit nur noch die Read-Only-Funktion des Chips 13. Somit sind untrennbar als Elemente "Barcode" und "drahtlos ausgelesbarer Chip" informationstechnisch untrennbar verbunden und können auch nicht wieder verwendet werden.

Vorzugsweise ist der Chip 13 für eine drahtlose Kommunikation gemäß mehrere Standards, bspw. sowohl gemäß dem UHF- wie auch dem NFC-Standard ausgelegt. Im logistischen Bereich erfolgt dann vorzugsweise die Verwendung des UHF-Standards. Der NFC-Standard wird vorzugsweise zur Kontrolle des Füllguts auf Authentizität und die Vermittlung von weiteren Informationen, gegebenenfalls sogar durch eine Umverpackung des Behälters hindurch verwendet.

Das Auslesen von Daten aus dem Chip 13 unter Zugrundelegung des NFC-Standards kann beispielsweise mittels NFC-fähiger Smartphones oder anderer NFC-fähiger Handgeräte erfolgen. Das Smartphone beziehungsweise Handgerät kann dann eine Verbindung zu einem Hintergrundsystem aufbauen, wo weitere relevante Informationen abgelegt sind (beispielsweise Zusammensetzung, Dosierung, Ablaufdatum, Verwendungszweck, etc. des in dem zugehörigen Behälter abgefüllten Gutes).

Gemäß einer weiteren Ausführungsform ist der Chip 13 auf einem Trägermaterial vorgesehen, das dann zusammen mit der den Matrix-Barcodes 11, 12 tragenden Folie in ein Werkzeug eingelegt wird und dann hinterspritzt wird.

Die Erfindung ist nicht durch die Beschreibung anhand der Ausführungsbeispiele beschränkt. Vielmehr sind alle Merkmale beliebig miteinander kombinierbar, solange der Gegenstand weiterhin von den Ansprüchen umfasst ist. Beispielsweise kann weiterhin im Rahmen der Erfindung anstatt eines Matrix-Barcodes auch jeder andere denkbare insbesondere zweidimensionale Code verwendet werden. Weiterhin kann anstatt oder in Kombination mit einem Matrix-Barcode ein Strichcode Verwendung finden. Dabei können auf einer Folie verschiedene Arten von zweidimensionalen Codes oder in Kombination mit eindimensionalen Codes verwendet werden. Auch sind hinsichtlich der Ausgestaltung der Form der Folie keinerlei Begrenzungen vorhanden. Die Folie kann kreisförmig, rechteckig oder auch in jeglicher anderen Form ausgebildet sein.

### Bezugszeichenliste:

- 1: Folie
- 2: Matrix-Barcode
- 3: Loch
- 10: Verschlussdeckel für Flaschen oder andere Behälter (bspw. für Pharmazeutika, Chemikalien etc.)
- 11: Matrix Barcode
- 12: Matrix Barcode
- 13: wenigstens ein Chip
- 14: Inlay
- 15: Innendichtung

## Patentansprüche

1. Gespritzter Kunststoffgegenstand, aufweisend:
- wenigstens ein 2d-Barcodeelement (11, 12) auf der Aussenseite des Kunststoffgegenstands, sowie
- wenigstens einen Chip (13), der drahtlos beschreibbar und auslesbar ist,
wobei ein weiteres Beschreiben des Chips (13) nach einem ersten Beschreiben des Chips (13) sperrbar durch ein drahtloses Signal ist, der Chip indessen weiterhin auslesbar ist, **dadurch gekennzeichnet, dass** der gespritzte Kunststoffgegenstand ein Verschlussdeckel (10) für Behälter ist, der ein Schraubgewinde aufweist, und
wobei der Chip (13) auf die Innenseite des Verschlussdeckels (10) eingelegt ist.

2. Gespritzter Kunststoffgegenstand nach Anspruch 1,
wobei das 2d-Barcodeelement (11,12) nach dem Spritzgiessen des Kunststoffgegenstandes von außen aufgedruckt ist, bspw. durch einen Digitaldruck.

3. Gegenstand nach Anspruch 1 oder 2,
bei dem Informationen, die in dem wenigstens einen 2d-Barcodelement codiert enthalten sind, auch in dem Chip(13) unveränderbar eingeschrieben sind.

4. Gegenstand nach einem der vorhergehenden Ansprüche,
bei dem der Chip auf einem auf der Rückseite des Gegenstands eingelegten Inlay (14) angeordnet ist.

5. Gegenstand nach Anspruch 4,
bei dem das Inlay (14) eine Innendichtung (15) auf der Rückseite eines Verschlussdeckels (10) kaschiert.

6. Gegenstand nach Anspruch 1,
bei dem der Chip (13) vorzugsweise zusammen mit einer mit dem 2d-Barcodeelement bedruckten Folie hinterspritzt ist.

7. Gegenstand nach einem der vorhergehenden Ansprüche,
bei dem der Chip für eine NFC- und/oder UHF-Kommunikation ausgelegt ist.

8. Gegenstand nach einem der vorhergehenden Ansprüche,
bei dem der Chip (13) ein Transponder mit Antenne ist.

9. Gegenstand nach einem der vorhergehenden Ansprüche,
bei dem mehrere Chips (13) vorgesehen sind.

10. Gegenstand nach einem der vorhergehenden Ansprüche, der als Verschlussdeckel für Flaschen oder andere Behälter (10) ausgebildet ist.

11. Gegenstand nach Anspruch 10,
der eine Erstöffnungsgarantie aufweist.

12. Gegenstand nach einem der vorhergehenden Ansprüche,
bei dem der Chip (13) durch eine nicht-transparente Folie abgedeckt ist.

## Claims

1. Injection-moulded plastic object having
- at least one 2-D barcode element (11, 12) on the outside of the plastic object,
and
- at least one chip (13) which can be written to and read out in a wireless fashion,
wherein further writing to the chip (13) can be disabled by wireless signal after the chip (13) is first written to but can continue to be read out, **characterized in that** the injection-moulded plastic object has a closure cap (10) for containers, which has a screw thread, and wherein the chip (13) is fitted onto the inside of the closure cap (10).

2. Injection-moulded plastic object according to Claim 1,
wherein the 2-D barcode element (11, 12) is printed on from the outside, for example by means of digital printing, after the injection moulding of the plastic object.

3. Object according to Claim 1 or 2,
in which information which is contained encoded in the at least one 2-D barcode element is also written to the chip (13) in an invariable form.

4. Object according to one of the preceding claims,
in which the chip is arranged on an inlay (14) which is provided on the rear side of the object.

5. Object according to Claim 4,
in which the inlay (14) conceals an internal seal (15) on the rear side of a closure cap (10).

6. Object according to Claim 1,
in which there is injection moulding behind the chip (13), preferably together with a film on which the 2-D barcode element is printed.

7. Object according to one of the preceding claims,
in which the chip is configured for NFC communication and/or UHF communication.

8. Object according to one of the preceding claims,
in which the chip (13) is a transponder with an antenna.

9. Object according to one of the preceding claims,
in which a plurality of chips (13) are provided.

10. Object according to one of the preceding claims,
which object is embodied as a closure cap for bottles or for other containers (10).

11. Object according to Claim 10,
which has a tamper-evidence safety feature.

12. Object according to one of the preceding claims,
in which the chip (13) is covered by a non-transparent film.

## Revendications

1. Objet en matière plastique injecté, comprenant :
- au moins un élément de code à barres 2D (11, 12) sur le côté extérieur de l'objet en matière plastique,
et
- au moins une puce (13) qui peut être écrite et lue sans fil,
une écriture supplémentaire de la puce (13) pouvant être bloquée après une première écriture de la puce (13) par un signal sans fil, la puce (13) pouvant cependant toujours être lue,
**caractérisé en ce que**
l'objet en matière plastique injecté est un couvercle de fermeture (10) pour un récipient qui possède un filet de vissage, et la puce (13) étant insérée sur le côté intérieur du couvercle de fermeture (10).

2. Objet en matière plastique injecté selon la revendication 1, l'élément de code à barres 2D (11, 12) étant imprimé depuis l'extérieur après le moulage par injection de l'objet en matière plastique, par exemple par une impression numérique.

3. Objet selon la revendication 1 ou 2, avec lequel les informations qui sont contenues dans l'au moins un élément de code à barres 2D sont également inscrites dans la puce (13) de manière inaltérable.

4. Objet selon l'une des revendications précédentes, avec lequel la puce est disposée sur un élément incrusté (14) inséré sur le côté arrière de l'objet.

5. Objet selon la revendication 4, avec lequel l'élément incrusté (14) masque une garniture d'étanchéité interne (15) sur le côté arrière d'un couvercle de fermeture (10).

6. Objet selon la revendication 1, avec lequel la puce (13) est de préférence injectée sur l'arrière conjointement avec un film sur lequel est imprimé l'élément de code à barres 2D.

7. Objet selon l'une des revendications précédentes, avec lequel la puce est conçue pour une communication NFC et/ou UHF.

8. Objet selon l'une des revendications précédentes, avec lequel la puce (13) est un transpondeur muni d'une antenne.

9. Objet selon l'une des revendications précédentes, avec lequel plusieurs puces (13) sont présentes.

10. Objet selon l'une des revendications précédentes, lequel est réalisé sous la forme d'un couvercle de fermeture pour des bouteilles ou d'autres récipients (10).

11. Objet selon la revendication 10, lequel possède un témoin d'inviolabilité.

12. Objet selon l'une des revendications précédentes, avec lequel la puce (13) est recouverte par un film non transparent.
